Europäisches Patentamt

European Patent Office

Office européen des brevets

(11) Veröffentlichungsnummer: **0 368 432**
**A1**

## (12) EUROPÄISCHE PATENTANMELDUNG

(21) Anmeldenummer: 89250079.4

(22) Anmeldetag: 08.11.89

(51) Int. Cl.⁵: **B60J 1/20**

(30) Priorität: 09.11.88 DE 8814196 U

(43) Veröffentlichungstag der Anmeldung:
**16.05.90 Patentblatt 90/20**

(84) Benannte Vertragsstaaten:
**AT BE CH DE ES FR GB GR IT LI LU NL SE**

(71) Anmelder: **SEITEC FORMTEILE AUS
KUNSTSTOFF GMBH
Lützowstrasse 102
D-1000 Berlin 30(DE)**

(72) Erfinder: **Seibert, Hendrik
Bartningallee 7
D-1000 Berlin 21(DE)**

(74) Vertreter: **Pfenning, Meinig & Partner
Kurfürstendamm 170
D-1000 Berlin 15(DE)**

(54) **Windabweiser.**

(57) Es wird ein Windabweiser (3) beschrieben, der in der Öffnung eines durch Verschiebung der Fensterscheibe (2) zu öffnenden und zu schließenden Fensters eines Personenkraftwagens auf der Innenseite montierbar ist. In einer zur Fensterscheibe zumindest angenähert parallelen und in einem eine Luftströmung ermöglichenden Abstand von dieser angeordneten Fläche des Windabweisers ist wenigstens ein Luftdurchlaß (7) vorgesehen. Der Windabweiser befindet sich vorzugsweise im in Fahrtrichtung hinteren Bereich des Fensters. Der Durchlaßquerschnitt des Luftdurchlasses kann verstellbar sein zur Regulierung der in das Fahrzeuginnere einströmenden zugfreien Frischluft.

FIG.1

EP 0 368 432 A1

# Windabweiser

Die Erfindung betrifft einen Windabweiser nach dem Oberbegriff des Anspruchs 1.

Die bekannten Windabweiser für Fenster von Personenkraftwagen sind derart ausgebildet, daß sie als haubenförmige Kunststoffstreifen an der oberen Kontur des Fensterrahmens auf der Außenseite befestigt werden. Dies ist strömungstechnisch ungünstig und bewirkt daher durch die haubenförmige Auswölbung eine Verschlechterung des serienmäßigen $c_w$-Wertes, insbesondere bei Fahrten mit geschlossenen Seitenfenstern. Dies führt zu einer Erhöhung des Kraftstoffverbrauches.

Es sind zwar auch auf der Fensterinnenseite einsteckbare kleine Kunststoffecken bekannt; diese erfüllen jedoch die Funktion als Zugluftabweiser nur unzureichend. Bereits bei mehr als fingerbreit geöffneter Seitenscheibe tritt starke Zugluft besonders im Kopf- und Nackenbereich der Insassen auf.

Es ist daher die Aufgabe der vorliegenden Erfindung, einen in der Öffnung eines durch Verschiebung der Fensterscheibe zu öffnenden und zu schließenden Fensters eines Personenkraftwagens auf der Innenseite montierbaren Windabweiser zu schaffen, der in aerodynamisch günstiger Weise angebracht werden kann. Des weiteren soll er seine Funktion als Zugluftabweiser speziell für den Kopf- und Nackenbereich der Insassen auch bei relativ weit geöffnetem Fenster bei allen Fahrgeschwindigkeiten erfüllen und darüber hinaus dem Fahrzeuginneren Frischluft zugfrei zuführen.

Diese Aufgabe wird erfindungsgemäß gelöst durch die im kennzeichnenden Teil des Anspruchs 1 angegebenen Merkmale. Vorteilhafte Weiterbildungen des erfindungsgemäßen Windabweisers ergeben sich aus den Unteransprüchen.

Die Zufuhr zugfreier Frischluft wird dadurch ermöglicht, daß bereits bei geringfügiger Öffnung des Fensters zwischen der Fensterscheibe und dem in geringem Abstand von dieser montierten Windabweiser ein Überdruck entsteht. Dieser wird kanalisiert und dem Fahrzeuginnenraum durch den Luftdurchlaß zugeführt. Der Überdruck entsteht durch den bei geöffneter Fensterscheibe auf den Windabweiser aufprallenden Fahrtwind. Dieser wird zum Teil nach außen abgeleitet und zum Teil nach unten zwischen Windabweiser und Seitenscheibe gedrückt.

Dieser Effekt wird beim vorliegenden Windabweiser genutzt, um die Zugluft bei geöffnetem Fenster fernzuhalten und gleichzeitig Frischluft zugfrei dem Fahrzeuginneren zuzuführen.

Eine Abwinkelung des vorderen Kantenbereiches des Windabweisers nach innen trägt erheblich zur Verbesserung der Funktion des Zugluftabweisens bei.

Die Erfindung wird im folgenden anhand eines in den Figuren dargestellten Ausführungsbeispiels näher beschrieben. Es zeigen:

Fig. 1 einen im Fenster der linken Vordertür eines Personenkraftwagens montierten Windabweiser,

Fig. 2 eine Ansicht eines Windabweisers im nichtmontierten Zustand, und

Fig. 3 einen senkrechten Schnitt durch die Fensterscheibe und den Windabweiser im Bereich des Luftdurchlasses.

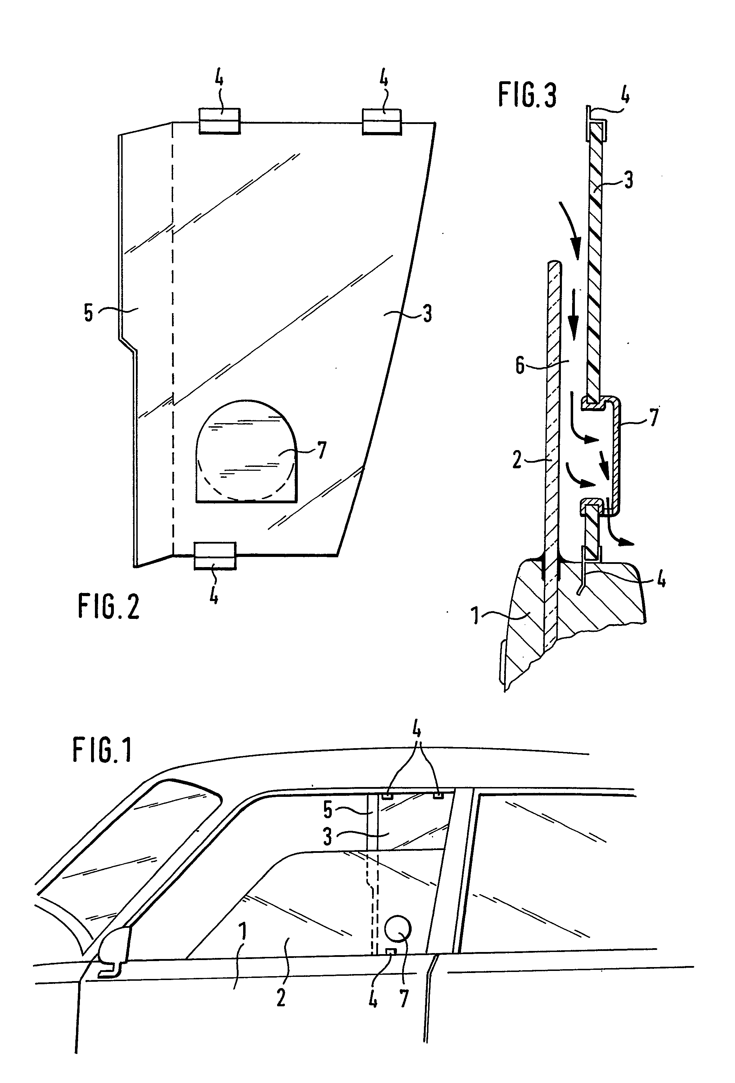

Fig. 1 zeigt den oberen Teil eines Personenkraftwagens mit der vorderen linken Tür 1, die zugleich den Rahmen des vorderen linken Seitenfensters bildet, in dem eine Fensterscheibe 2 zum Öffnen und Schließen des Seitenfensters in senkrechter Richtung verschiebbar gelagert ist. Im in Fahrtrichtung hinteren Fensterbereich ist in bezug auf die Fensterscheibe 2 auf der Innenseite, d.h. in Fig. 1 hinter der Fensterscheibe 2, ein Windabweiser 3 an den den Fensterrahmen bildenden Teilen der Tür 1 mit Hilfe von Klammern 4 befestigt. Der Windabweiser 3 ist mit seiner oberen und unteren sowie mit seiner hinteren Kante dem Fensterrahmen angepaßt, so daß hier ein Luftdurchtritt nicht möglich ist.

Der freie vordere Randbereich 5 des Windabweisers 3 ist nach innen abgewinkelt. Fig. 2 zeigt somit einen Windabweiser 3 für ein rechtes Seitenfenster. Der Randbereich 5 ist im oberen Teil des Windabweisers 3 breiter ausgebildet als im unteren Teil. Durch die Abwinkelung des Randbereichs 5 wird eine verbesserte Umlenkung des Fahrtwindes nach außen erreicht, so daß keine Zugluft in das Innere des Fahrzeugs einströmt. Im vorderen, nicht durch den Windabweiser 3 abgedeckten Bereich des Fensters bildet sich durch die Luftströmung außerhalb des Fahrzeugs ein Unterdruck aus, der bei geöffnetem Fenster ein Einströmen von Zugluft in das Fahrzeuginnere in diesem Bereich verhindert. Erst im hinteren Bereich, d.h. im Bereich des Windabweisers 3 treten solche Druckverhältnisse auf, daß ein Einströmen von Zugluft erfolgen würde. Dies wird jedoch durch den Windabweiser 3 verhindert.

Fig. 3 zeigt, daß zwischen der Fensterscheibe 2 und dem hierzu parallelen Windabweiser 3 ein Spalt 6 mit einer Breite von mehreren Millimetern besteht. Bei teilweise geöffnetem Fenster strömt durch den Fahrtwind bedingt Luft in den Spalt 6, wodurch in diesem ein Überdruck auftritt.

Im unteren Teil des Windabweisers 3, d.h. auch bei teilweise geöffnetem Fenster noch unterhalb der Oberkante der Fensterscheibe 2, befindet sich eine Öffnung, in der ein Einsatz 7 aufgenommen ist. Der Einsatz 7 enthält einen Luftdurchlaß, dessen Durchlaßquerschnitt beispielsweise durch Drehen des Einsatzes 7 verändert werden kann. Es findet somit durch den Überdruck im Spalt 6 eine Luftströmung aus diesem durch den Einsatz 7 in das Innere des Fahrzeugs statt, die in ihrer Stärke geregelt oder auch ganz unterbunden werden kann. Der Einsatz 7 kann so ausgebildet sein, daß die hindurchtretende Luftströmung laminarisiert wird. Die Austrittsöffnung des Einsatzes 7 ist ebenfalls in ihrer Lage veränderbar, so daß der in das Fahrzeuginnere eintretende Luftstrom in beliebige Richtungen, zum Beispiel direkt nach unten gelenkt werden kann. Damit kann sichergestellt werden, daß die Luftströmung nicht auf die Fahrzeuginsassen gerichtet ist, so daß diese trotz der Zuführung von Frischluft keine Zugluft verspüren.

Der Windabweiser 3 besteht vorzugsweise aus durchsichtigem Sicherheits-Acrylglas, so daß er keine Sichtbehinderung darstellt.

Der Windabweiser 3 kann anstelle eines verstellbaren Luftdurchlasses auch eine oder mehrere Öffnungen mit konstantem Durchlaßquerschnitt aufweisen. Diese können in beliebiger Form ausgebildet sein, zum Beispiel rund, mehreckig oder schlitzartig.

Der vorliegende Windabweiser für Fenster von Personenkraftwagen erfüllt somit die folgenden wesentlichen Anforderungen:

1. Keine Beeinträchtigung des serienmäßigen $c_w$-Wertes und damit keine ungünstige Beeinflussung des Strömungsverlaufes des an der Karosserie vorbeiströmenden Fahrtwindes.

2. Zugfreiheit im Fahrzeuginnern auch bei weit geöffneter Fensterscheibe bei allen Geschwindigkeiten.

3. Zufuhr zugfreier Frischluft durch vorzugsweise regulierbaren, im Windabweiser integrierten Luftdurchlaß zur Belüftung des Fahrzeuginnern.


**Ansprüche**

1. In der Öffnung eines durch Verschiebung der Fensterscheibe zu öffnenden und zu schließenden Fensters eines Personenkraftwagens auf der Innenseite montierbarer Windabweiser, **dadurch gekennzeichnet,** daß in einer zur Fensterscheibe (2) zumindest angenähert parallelen und in einem eine Luftströmung ermöglichenden Abstand von dieser angeordneten Fläche des Windabweisers (3) wenigstens ein Luftdurchlaß vorgesehen ist.

2. Windabweiser nach Anspruch 1, dadurch gekennzeichnet, daß der Luftdurchlaß so angeordnet ist, daß er auch bei teilweiser Öffnung des Fensters der Fensterscheibe (2) gegenüberliegt.

3. Windabweiser nach Anspruch 1 oder 2, dadurch gekennzeichnet, daß der Durchlaßquerschnitt des Luftdurchlasses veränderbar ist.

4. Windabweiser nach Anspruch 3, dadurch gekennzeichnet, daß der Luftdurchlaß einen zur Veränderung des Durchlaßquerschnittes drehbaren Einsatz (7) aufweist.

5. Windabweiser nach einem der Ansprüche 1 bis 4, dadurch gekennzeichnet, daß der Luftdurchlaß eine Laminarisierung der Luftströmung bewirkt.

6. Windabweiser nach einem der Ansprüche 1 bis 5, dadurch gekennzeichnet, daß der Luftdurchlaß die Luftströmung in eine vorbestimmte Richtung lenkt.

7. Windabweiser nach Anspruch 6, dadurch gekennzeichnet, daß die Richtung der Luftströmung veränderbar ist.

8. Windabweiser nach einem der Ansprüche 1 bis 7, dadurch gekennzeichnet, daß er im in Fahrtrichtung des Personenkraftwagens hinteren Bereich des Fensters mit an den Fensterrahmen angepaßter Kontur angeordnet ist.

9. Windabweiser nach einem der Ansprüche 1 bis 8, dadurch gekennzeichnet, daß er durch Klammern (4) am Fensterrahmen befestigt ist.

10. Windabweiser nach einem der Ansprüche 1 bis 9, dadurch gekennzeichnet, daß sein in Fahrtrichtung vorderer Randbereich (5) nach innen abgewinkelt ist.

11. Windabweiser nach Anspruch 10, dadurch gekennzeichnet, daß der abgewinkelte Randbereich (5) im unteren Teil schmaler ist als im oberen Teil.

12. Windabweiser nach einem der Ansprüche 1 bis 11, dadurch gekennzeichnet, daß er aus transparentem Sicherheits-Acrylglas besteht.

FIG.3

FIG.2

FIG.1

Europäisches
Patentamt

**EUROPÄISCHER RECHERCHENBERICHT**

Nummer der Anmeldung

EP 89 25 0079

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-2 573 396 (R. BRYCE)<br>* Spalte 2, Zeilen 32-44; Spalte 3, Zeilen 42-68; Figuren 1-4 *<br>--- | 1-2,5-6 ,8-10, 12 | B 60 J 1/20 |
| A | US-A-4 089 256 (J. FURCINI)<br>* Insgesamt *<br>--- | 1,8,11, 12 | |
| A | US-A-4 111 106 (W. BURNS)<br>* Spalte 2, Zeilen 19-53; Figuren 1-4 *<br>--- | 1,3-7 | |
| A | FR-A-2 531 015 (P. ESCOFFIER)<br>* Seite 2, Zeile 14 - Seite 3, Zeile 19; Figuren 1-4 *<br>----- | 1,3,5 | |

**RECHERCHIERTE SACHGEBIETE (Int. Cl.5)**

B 60 J
B 60 H

Der vorliegende Recherchenbericht wurde für alle Patentansprüche erstellt

| Recherchenort | Abschlußdatum der Recherche | Prüfer |
|---|---|---|
| DEN HAAG | 08-01-1990 | LINTZ C.H. |